Europäisches Patentamt

European Patent Office

Office européen des brevets

(11) Veröffentlichungsnummer: **0 266 767**

**A2**

(12) # EUROPÄISCHE PATENTANMELDUNG

(21) Anmeldenummer: **87116308.5**

(22) Anmeldetag: **05.11.87**

(51) Int. Cl.⁴ **B60H 1/26 , B60H 3/06**

(30) Priorität: **06.11.86 DE 3637773**

(43) Veröffentlichungstag der Anmeldung:
**11.05.88 Patentblatt 88/19**

(84) Benannte Vertragsstaaten:
**DE ES FR GB IT SE**

(71) Anmelder: **BAYERISCHE MOTOREN WERKE AG**
**Postfach 40 02 40 Petuelring 130 - AJ-31**
**D-8000 München 40(DE)**

(72) Erfinder: **Ball, Wilfried**
**Breslauer Strasse 24**
**D-8312 Dingolfing(DE)**

(74) Vertreter: **Bücken, Helmut**
**Bayerische Motoren Werke**
**Aktiengesellschaft Postfach 40 02 40**
**Petuelring 130 - AJ-30**
**D-8000 München 40(DE)**

(54) **Anordnung zur Frischluftzufuhr für die Belüftung und/oder Klimatisierung eines Personenkraftwagens.**

(57) Ein Frischluft-Führungskanal zur Frischluftzufuhr für die Belüftung und/oder Klimatisierung eines Personenkraftwagens ist innerhalb der entsprechend ausgebildeten A-Säule der PKW-Karosserie vorgesehen. Hierdurch kann ein bislang separater Führungskanal entfallen. Durch die Anordnung im PKW-Seitenbereich können größere Kanalquerschnitte realisiert werden. Die Anordnung eines flächenmäßig großen austauschbaren Filterelementes wird ermöglicht. In einem Ausführungsbeispiel ist ferner das Heiz-/Klimagerät in der umgestalteten A-Säule mit vorteilhafter tiefer Schwerpunktlage angeordnet.

Fig. 1

EP 0 266 767 A2

## Anordnung zur Frischluftzufuhr für die Belüftung und/oder Klimatisierung eines Personenkraftwagens.

Die Erfindung bezeht sich auf eine Anordnung zur Frischluitzufuhr für die Belüftung und/oder Klimatisierung eines Personenkraftwagens mit Karosserie-Tragsäulen.

Die Frischluftzufuhr für die Belüftung bzw. Klimatisierung des Innenraumes erfolgt bei bekannten Personenkraftwagen auf unterschiedliche Weise. Bei der zumeist verwendeten Anordnung mündet zwischen der Windschutzscheibe sowie der sich daran anschließenden Fronthaube ein mit einem Abdeckgitter versehener Luftführungskanal. Eine andere Anordnung zeigt die gattungsbildende DE-OS 30 24 988, wo im Bereich der seitlichen Fronthauben-Trennfuge Lufteintrittsspalte vorgesehen sind, welche in einen separaten Luftführungskanal münden. Jene Lösung zeigt gegenüber der erstgenannten Anordnung den Vorteil, daß der Luftführungskanal großvolumiger gestaltet werden kann, da im seitlichen Fahrzeugbereich - im Gegensatz zum unteren Windschutzscheibenbereich, in welchem die Armaturentafel sowie der Verbrennungsmotor nahe beieinander angeordnet sind - großzügigere Platzverhältnisse zur Verfügung stehen. Beide bekannten Anordnungen weisen jedoch den Nachteil auf, daß für die Frischluftzufuhr ein separater Luftführungskanal vorgesehen sein muß. Jener Kanal ist dabei in aufwendiger Weise den durch Karosserie-oder andere Bauteile vorgegebenen Platzverhältnissen anzupassen.

Aufgabe der Erfindung ist es, eine hinsichtlich des Bauaufwandes vereinfachte Anordnung zur Frischluftzufuhr aufzuzeigen.

Diese Aufgabe wird durch die kennzeichnenden Merkmale des ersten Anspruchs gelöst.

Erfolgt die Frischluftzufuhr über eine speziell ausgebildete Karosserie-Tragsäule, so kann ein weiterer, separater Luftführungskanal ersatzlos entfallen. Besonders geeignet - jedoch nicht auf jene Ausführungsform beschränkt - ist hierfür die A-Säule einer Personenkraftwagen-Karosserie. Zwar empfiehlt es sich, für eine erfindungsgemäße A-Säule einen gegenüber herkömmlichen A-Säulen-Ausbildungen vergrößerten Querschnitt vorzusehen, jedoch kann durch entsprechende Formgebung vorteilhafterweise ein Teil des Radhaus-Schottbleches entfallen. Auch können sich die den Frischluft-Führungskanal bildenden Blechteile beispielsweise direkt an den Federtopf der vorderen Radaufhängung anschließen. Jene erfindungsgemäße Anordnung zeigt zudem den Vorteil, daß der Frischluft-Führungskanal einen gegenüber herkömmlichen Kanalausbildungen vergrößerten Querschnitt aufweist. Eine Reduzierung des Luftströmungswiderstandes ist hiervon die Folge; es können mit der erfindungsgemäßen Anordnung also größere Frischluftmassen geführt werden.

Vorteilhafte Weiterbildungen der Erfindung beschreiben die Unteransprüche.

Eine Ausbildung gemäß Anspruch 2 ist insbesondere dann von Vorteil, wenn die Eintrittsöffnung des Frischluft-Führungskanales im Bereich des oberen Endes des Federtopfes liegt. Jener Bereich wird zumeist von der ge schlossenen Fahrzeug-Fronthaube bzw. in allgemeinerer Form von einem beweglichen Karosserie-Außenteil abgedeckt, so daß der Frischluft-Führungskanal stylistischen Anforderungen nicht im Wege steht. Die Funktion der Frischluftansaugung übernimmt dabei ein in der Fahrzeug-Fronthaube vorgesehener Luftkanal, welcher seinerseits an der Karosserie-Außenseite mündet. Um eine eventuelle Ansaugung beispielsweise von Motordämpfen zu vermeiden, ist zwischen der Eintrittsöffnung des Frischluft-Führungskanales sowie dem in der Fronthaube (Motorhaube) vorgesehenen Luftkanal eine Dichtung vorgesehen. Die Zufuhr von Ansaugluft erfolgt dabei also durch die bzw. innerhalb der Fahrzeug-Fronthaube.

Ist gemäß Anspruch 3 im Frischluft-Führungskanal und/oder im Luftkanal des beweglichen Karosserie-Außenteiles en Luftfilterelement vorgesehen, so ist jenes - insbesondere bei einer Ausbildung gemäß Anspruch 2 - besonders einfach austauschbar. Dazu muß nämlich lediglich die Fronthaube geöffnet werden, wonach ein derartiges Filterelement bei entsprechender Anordnung frei zugänglich liegen kann. Auch hier tritt wiederum der Vorteil des möglichen vergrößerten Frischluft-Ansaugquerschnittes deutlich zum Vorschein. Ein Filterelement, sei es ein herkömmliches Luftfilter oder ein Aktivkohlefilter, ist nur dann besonders wirksam und weist dabei einen erwünscht geringen Strömungswiderstand auf, wenn der durchströmte Querschnitt möglichst groß gehalten werden kann. Eine derartige Ausbildung ist aber bei entsprechender Ausgestaltung der Karosserie-Tragsäule ohne weiteres möglich.

Die Ansprüche 4 und 5 bilden einen erfindungsgemäßen Frischluft-Führungskanal sowie ein sich an diesen üblicherweise anschließendes Heiz-/Klimagerät vorteilhaft weiter. Während das Klimagerät bei allen heute gängigen Personenkraftwagen zentral unterhalb der Armaturentafel angeordnet ist, befindet es sich nunmehr ebenfalls in der Karosserie-Tragsäule oder in einem Karosserie-Seitenteil. Da die in einem Klimagerät vorgesehenen Bauteile, wie Gebläse, Heizungswärmetauscher sowie Klimaanlagen-Verdampfer nicht nur entsprechend viel Bauraum benötigen, sondern darüber hinaus ein nicht zu unterschätzendes Gewicht aufweisen und somit die Schwerpunktlage des Personenkraftwagens erheblich verschlechtern, ist die bekannte Klimageräte-Anordnung jedoch von Nachteil.

Dem gegenüber ist es bei Anordnung in einem Karosserie-Seitenteil als auch in einer Karosserie-Tragsäule möglich, das Heiz-/Klimagerät praktisch maximal tiefliegend in Höhe des Karosserie-Bodens vorzusehen, was bei bekannter mittiger Anordnung unterhalb der Armaturentafel wegen des ebenfalls mittig und gegenüber dem Karosserieboden erhöht verlaufenden Getriebetunnels ausgeschlossen ist. Die beiden angegebenen Anordnungen bieten darüber hinaus den Vorteil, daß sich das Heiz-/Klimagerät in einem bislang nicht genutzten Raum außerhalb des Bedienbereiches des Fahrzeugführers befindet. Somit ist ein bislang vom Heiz-/Klimagerät in Anspruch genommener zusätzlicher Platz geschaffen für die Anbringung wichtiger Bedien-oder Anzeigeelemente, die unter ergonomischen Gesichtspunkten nunmehr wieder stärker in das Sichtfeld des Fahrers-Beifahrers gerückt werden bzw. wieder großzügiger gestaltet werden können. Weiters ist von Vorteil, daß durch diese Anordnung die Verwendung größerer Gebläseeinheiten ermöglicht wird. Zur Erzielung eines erforderlichen Luftdurchsatzes kann somit die Gebläsedrehzahl herabgesetzt und der Innengeräuschpegel reduziert werden.

Anspruch 6 beschreibt einen PKW mit zwei Heiz-/Klimageräten zur getrennt regelbaren Klimatisierung beispielsweise der linken und rechten Fahrzeughälfte. In diesem Fall ist eine erfindungsgemäße Anordnung zur Frischluftzufuhr für die Belüftung bzw. Klimatisierung besonders vorteilhaft, da die damit erzielbaren Vorteile doppelt zum Vorschein kommen.

Im folgenden wird die Erfindung anhand eines bevorzugten Ausführungsbeispiels näher beschrieben. Es zeigt:

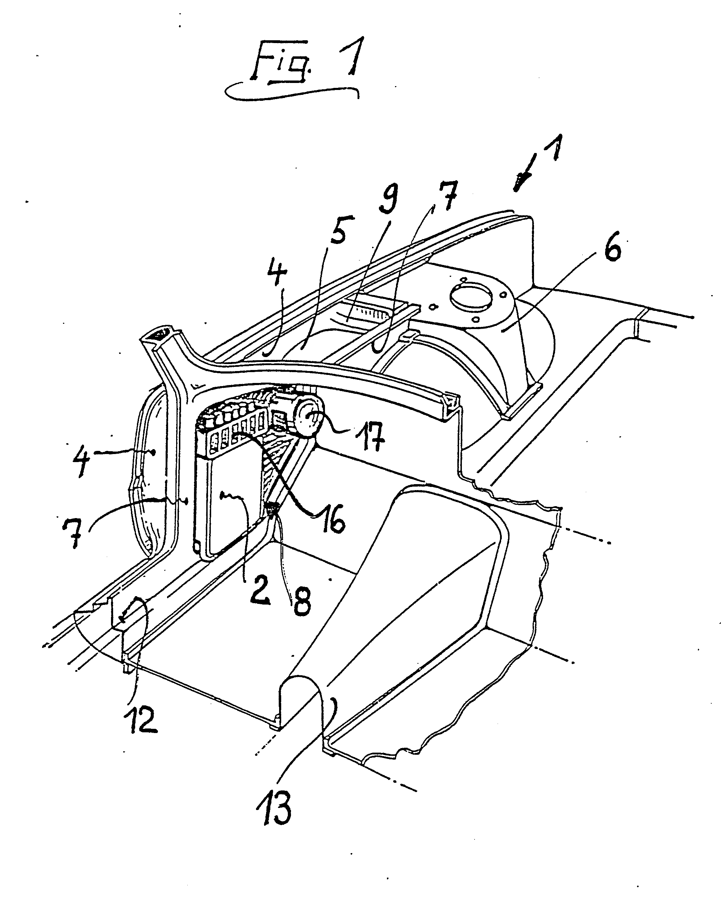

Fig. 1 eine perspektivische Darstellung des linken vorderen Bereiches einer PKW-Rohkarosserie,

Fig. 2 eine Aufsicht auf eine PKW-Rohkarosserie, wobei die rechte Bildhälfte den Stand der Technik zeigt, demgegenüber in der linken Bildhälfte wesentliche erfindungsgemäße Änderungen dargestellt sind,

Fig. 3 einen perspektivischen Ausschnitt einer Rohkarosserie aus Fig. 2 gemäß dem Stand der Technik (vorderer Türschweller sowie Seitenteil),

Fig. 4 einen zu Fig. 3 ähnlichen Ausschnitt für eine erfindungsgemäße Karosserie,

Fig. 5 eine ähnliche Darstellung wie Fig. 1, zusätzlich versehen mit Luftführungskanälen sowie komplettiertem Frischluft-Führungskanal.

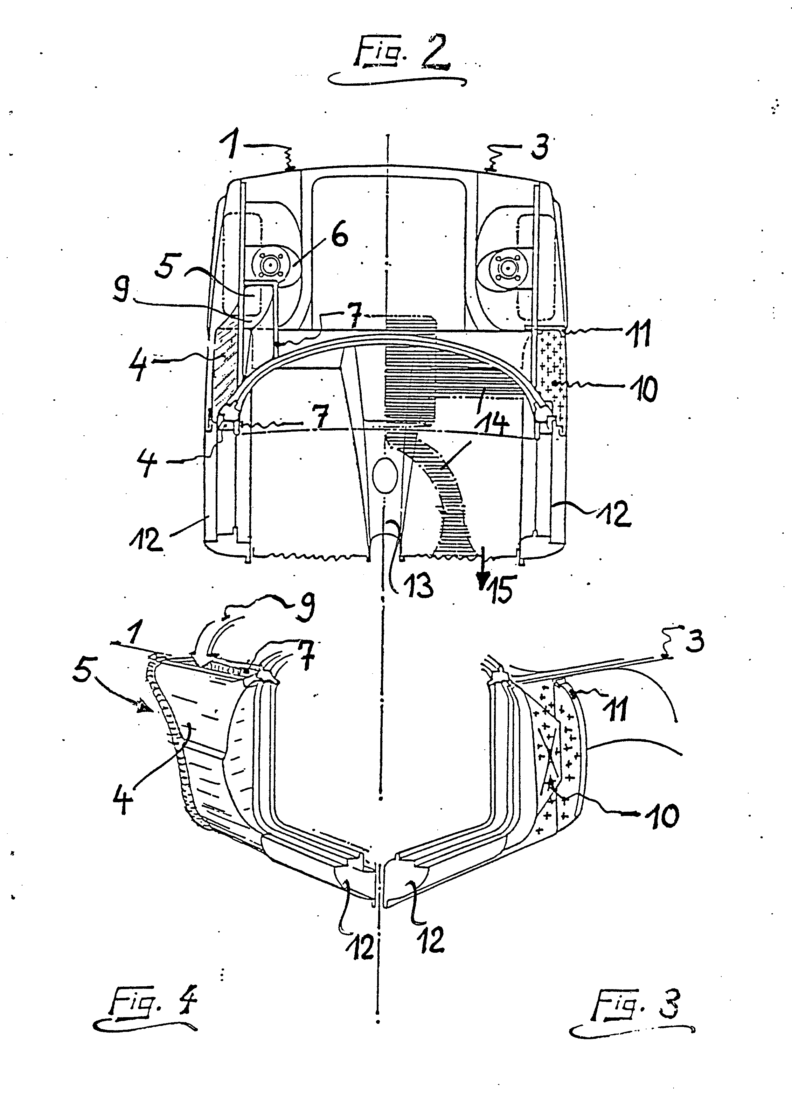

In einer in ihrer Gesamtheit mit 1 bezeichneten PKW-Karosserie ist im vorderen Seitenbereich ein Klimagerät 2 angeordnet. Dazu ist die Rohkarosserie gemäß der Darstellung in der linken Bildhälfte von Fig. 2 bzw. in Fig. 4 gegenüber einem herkömmlich aufgebauten Karosserierahmen 3, wie er in der rechten Bildhälfte von Fig. 2 bzw. in Fig. 3 gezeigt ist, abgeändert. Besonders deutlich wird diese Änderung für die aus den Blechen 4 und 7 aufgebaute A-Säule.

So ist das A-Säulen-Außenblech 4 ab Fahrzeugmitte abwärts aufgeweitet und bis zum Radhaus 5 bzw. zum vorderen Federtopf 6 nach vorne vorgezogen. Ähnlich gestaltet ist das A-Säulen-Innenblech 7, welches im Fußraumbereich mit einem Durchbruch 8 zur Montage des Klimagerätes 2 versehen ist. Die beiden A-Säulen-Bleche 4 und 7 bilden somit nicht nur einen ausreichenden Raum zur Unterbringung des Klimagerätes 2, sondern zugleich den erfindungsgemäß ausgebildeten Frischluft-Führungskanal 9. Ein separater bislang üblicher Frischluft-Führungskanal kann somit ersatzlos entfallen.

Der in der rechten Bildhälfte von Fig. 2 sowie in Fig. 3 durch Kreuze markierte und mit 10 bezeichnete Bauraum bleibt bei herkömmlichen Karosserierahmen praktisch ungenutzt. Zusätzlich kann bei der erfindungsgemäßen Karosseriegestaltung auch das üblicherweise erforderliche Radhaus-Schottblech 11 entfallen, während in diesem Ausführungsbeispiel der Türschweller 12 sowie der Getriebetunnel 13 keine wesentliche Änderung erfährt. In der rechten Bildhälfte von Fig. 2 ist durch Schraffur zusätzlich der beim Stand der Technik erforderliche Bauraum 14 für die Anordnung eines Klimagerätes in Fahrzeugmitte über dem Getriebetunnel 13 sowie die zugehörige Luftführung in den Fahrzeug-Fondraum 15 dargestellt.

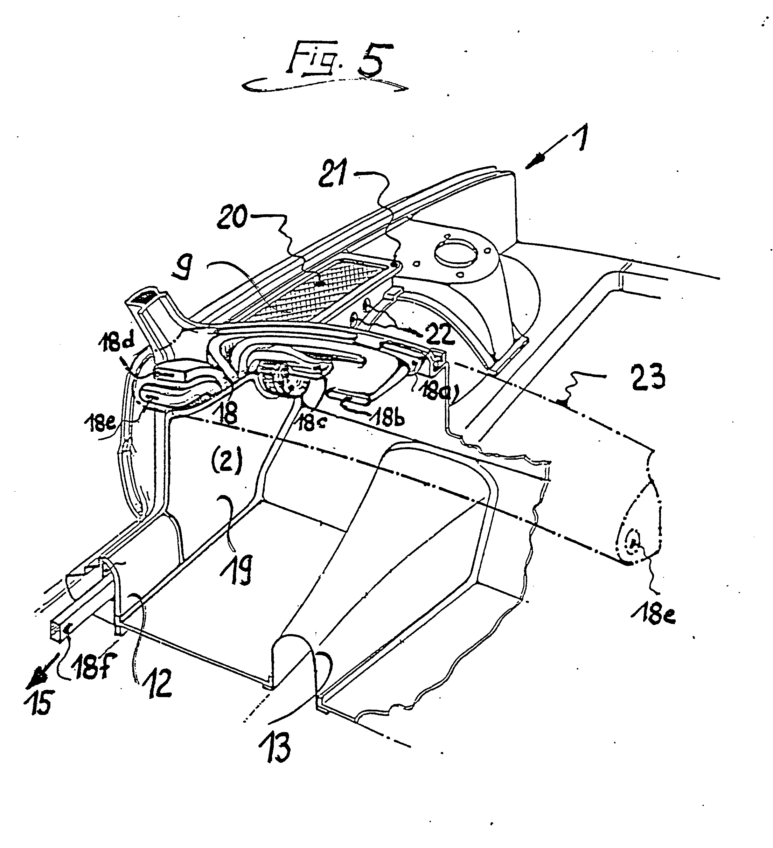

Das bereits vormontierte, in der Karosserie gummigelagerte Klimagerät 2 ist mit mehreren Luftaustrittsöffnungen 16 sowie einem Gebläsemotor 17 versehen. Auf die Luftaustrittsöffnungen 16 ist eine Luftverteilereinheit 18, besteht aus mehreren Luftleitkanälen 18a bis 18f aufgesetzt. Dargestellt ist dies in Fig. 5, wobei das Klimagerät 2 mittels einer Abdeckplatte 19 verschalt ist. Vorteilhafterweise ist der Luftleitkanal 18f zur Klimatisierung des Fahrzeug-Fonraumes 15 im Inneren des Türschwellers 12 angeordnet. Durch die damit gegenüber dem Stand der Technik verbesserte, da geradlinig verlaufende Luftführung, wird eine in ihrer Wirkung deutlich gesteigerte Fondraumbelüftung ermöglicht.

Desweiteren zeigt Fig. 5 Einzelheiten des Frischluft-Führungskanals 9. Abgedeckt ist dieser mit einem Luftfilterelement 20, welches aufgrund seiner Anordnung einfach austauschbar ist. Eine an der Eintrittsöffnung des Frischluft-Führungskanales 9 umlaufende Dichtung 21 schließt luftdicht an die Innenfläche der nicht dargestellten Fahrzeug-Fronthaube an, so daß durch einen innerhalb dieser vorgesehenen, ebenfalls nicht gezeigten, sowie an der Außenseite der Fronthaube mündenden Luftkanal die Luftzuführung von einem, äußeren Ansaugpunkt erfolgt. Durch die Dichtung 21 wird das Eindringen von Dämpfen aus dem von der Fronthaube verdeckten Motorraum vermieden. Ferner weist der Frischluft-Führungskanal 9 mehrere Durchbrüche 22 auf, durch welche Leitungen zur Versorgung des Klimagerätes mit einem Wärmeträgermedium gelegt sind.

Obowhl im obigen Ausführungsbeispiel nur der linke vordere Karosseriebereich 1 und somit auch nur ein Klimagerät 2 dargestellt ist, ist die vorliegende Erfindung auch besonders geeignet für die Anordnung zweier für den linken und rechten Fahrzeugbereich vorgesehener Frischluft-Führungskanäle zu getrennt regelbaren Klimageräten. Die Vorteile der einfachen Ausbildung, der abgesenkten Schwerpunktlage, sowie der Platzersparnis treten dann noch deutlich stärker zum Vorschein.

## Ansprüche

1. Anordnung zur Frischluftzufuhr für die Belüftung und/oder Klimatisierung eines Personenkraftwagens mit Karosserie-Tragsäulen, dadurch gekennzeichnet, daß eine Karosserie-Tragsäule (4, 7) als Frischluft-Führungskanal (9) ausgebildet ist.

2. Anordnung nach Anspruch 1, dadurch gekennzeichnet, daß sich die Eintrittsöffnung des Frischluft-Führungskanales an einen in einem beweglichen Karosserie-Außenteil (Fronthaube) vorgesehenen, auf der Außenseite des Karosserie-Außenteiles mündenden Luftkanal anschließt, wobei im Übergangsbereich zwischen der Eintrittsöffnung sowie dem Luftkanal eine Dichtung (21) vorgesehen ist.

3. Anordnung nach Anspruch 1 oder 2, dadurch gekennzeichnet, daß im Frischluft-Führungskanal (9) und/oder im Luftkanal des beweglichen Karosserie-Außenteiles ein Luftfilterelement (20) vorgesehen ist.

4. Anordnung nach einem der vorangegangenen Ansprüche, dadurch gekennzeichnet, daß der Frischluft-Führungskanal (9) in einem Heiz-/Klimagerät (2) mündet, welches in der Karosserie-Tragsäule (4, 7) angeordnet ist.

5. Anordnung nach einem der vorangegangenen Ansprüche, dadurch gekennzeichnet, daß der Frischluft-Führungskanal (9) in einem Heiz-/Klimagerät (2) mündet, welches in einem Karosserie-Seitenteil angeordnet ist.

6. Anordnung nach einem der vorangegangenen Ansprüche, dadurch gekennzeichnet, daß auf der linken und rechten Seite des Personenkraftwagens (1) je ein Frischluft-Führungskanal (9) für je ein Heiz-/Klimagerät (2) vorgesehen ist.

Fig. 1

Fig. 2

Fig. 4

Fig. 3

Fig. 5